**Europäisches Patentamt**

**European Patent Office**

**Office européen des brevets**

(19)

(11) Veröffentlichungsnummer: **0 064 713**

**A1**

(12) # EUROPÄISCHE PATENTANMELDUNG

(21) Anmeldenummer: **82103767.8**

(22) Anmeldetag: **03.05.82**

(51) Int. Cl.³: **B 65 B 51/10**

(30) Priorität: **07.05.81 DE 3118077**

(43) Veröffentlichungstag der Anmeldung:
**17.11.82 Patentblatt 82/46**

(84) Benannte Vertragsstaaten:
**CH DE FR GB IT LI**

(71) Anmelder: **ROBERT BOSCH GMBH**
**Postfach 50**
**D-7000 Stuttgart 1(DE)**

(72) Erfinder: **Bubenzer, Wilfried**
**Sportplatzweg 3**
**D-5250 Engelskirchen(DE)**

(74) Vertreter: **Glaser, Ernst**
**c/o Robert Bosch GmbH Geschäftsbereich**
**Verpackungsmaschinen Patent- und Lizenzabteilung**
**Nauheimer Strasse 99**
**D-7000 Stuttgart 50(DE)**

(54) **Siegelbacken zum Bilden von Nähten an heisssiegelbaren Packstoffen.**

(57) Ein Siegelbacken (10) zum Bilden von Nähten an heißsiegelbaren Packstoffen hat zur Wärmeerzeugung ein elektrisches Widerstandsheizelement (17, 20). Um die Wärme auf die Siegelfläche (12) des Siegelbackens so zu übertragen, daß auf dieser eine gleichmäßige Temperaturverteilung auftritt, ist zwischen dem Heizelement und dem Siegelbacken eine Hülse (15, 21) aus einem hochwärmeleitbaren Metall, beispielsweise Aluminium angeordnet. Die Hülse ist im Siegelbacken stramm eingepaßt.

EP 0 064 713 A1

0064713

VM 706
5.5.1981 Gl/han

ROBERT BOSCH GMBH, 7000 Stuttgart

Siegelbacken zum Bilden von Nähten an heißsiegelbaren
Packstoffen

Stand der Technik

Die Erfindung geht aus von einem Siegelbacken nach der Gattung des Hauptanspruchs. Bei einem solchen bekannten Siegelbacken, der wegen der hohen Druckbeanspruchung und der Gefahr des Wärmeverzugs aus einem chromlegierten, wärmebehandelten Stahl besteht, ist die Verteilung der Wärme, welche die Heizpatrone überträgt, auf der Siegelfläche sehr ungleichmäßig. Im Betrieb können an verschiedenen Stellen der Siegelfläche wegen ungleicher Wärmeabnahme durch den heiß zu siegelnden Packstoff Temperaturunterschiede bis zu 50°C auftreten. Dies führt zu ungleichmäßiger Festigkeit der Siegel- oder Schweißnähte.

Vorteile der Erfindung

Der erfindungsgemäße Siegelbacken mit den kennzeichnenden Merkmalen des Hauptanspruchs hat demgegenüber den Vorteil, daß die von dem Heizelement erzeugte Wärme sich in der hochwärmeleitfähigen Hülse so verteilt, daß diese eine gleichmäßig verteilte Temperatur annimmt und dementsprechend Wärme auf den Siegelbacken überträgt, so daß auch dessen Siegelfläche eine gleichmäßig verteilte Temperatur aufweist.

Durch die in den Unteransprüchen aufgeführten Maßnahmen sind vorteilhafte Weiterbildungen und Verbesserungen des im Hauptanspruch angegebenen Siegelbackens möglich.

Zeichnung

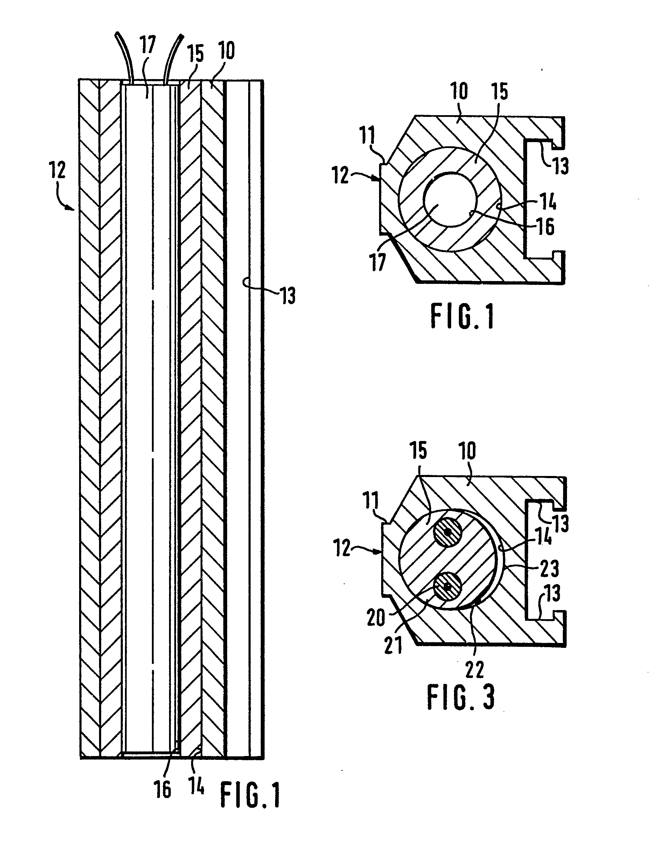

Ausführungsbeispiele der Erfindung sind in der Zeichnung dargestellt und in der nachfolgenden Beschreibung näher erläutert. Es zeigen Figur 1 einen Siegelbacken im Längsschnitt, Figur 2 den Siegelbacken nach Figur 1 im Querschnitt und Figur 3 ein zweites Ausführungsbeispiel eines Siegelbackens im Querschnitt.

Beschreibung der Erfindung

Ein langgestreckter Siegelbacken 10 hat auf einer Seite eine vorstehende Siegelleiste 11 mit einer Siegelfläche 12 und auf der gegenüberliegenden Seite eine Führungsnut 13 zum Befestigen an einem nicht dargestellten Halter. Der Siegelbacken 10 hat längs eine zylindrische Bohrung 14. Er besteht aus einem abriebfesten, verzugsarmen Chromstahl hoher Standfestigkeit.

In der Bohrung 14 des Siegelbackens 10 ist eine dickwandige Hülse 15 stramm sitzend eingepaßt, so daß ihre Außenwandung in innigem Kontakt mit der Wandung der Bohrung 14 ist. Beim Ausführungsbeispiel nach Figur 2 hat die Hülse 15 eine zylindrische Bohrung 16, in die eine Heizpatrone 17 eingesetzt ist. Die handelsübliche Heizpatrone enthält einen elektrischen Heizwiderstand.

Beim Ausführungsbeispiel nach Fig. 3 besteht das Heizelement aus einem U-förmig gebogenen elektrischen Heizstab 20, der von einer zylindrischen Hülse 21 so umschlossen ist, daß lediglich seine Enden aus dieser hervorragen. Die Hülse 21 wird durch Umgießen des Heizstabes 20 mit Aluminium und durch Feindrehen ihres Umfanges geformt. Sie wird zusammen mit dem Heizstab 20 in die Bohrung 14 des Siegelbackens 10 eingepreßt oder nach Unterkühlen in diese eingeschoben, so
daß sie in der Bohrung 14 des Siegelbackens stramm sitzt.

Um die Wärmeübertragung von der Hülse 21 an den Siegelbacken
10 auf der Seite zu vermindern, auf der der Siegelbacken 10
mit seiner Führungsnut 13 an einem Halter befestigt ist,
hat die Hülse 21 auf dieser Seite mehrere exzentrische Abtragungen 22, welche sich mit Stützstegen 23 abwechseln.
Durch die von den Abtragungen geschaffenen Spalte, wird weniger Wärme zur Halterung hin übertragen als zur Siegelleiste
12.

Ergänzend wird darauf hingewiesen, daß der erfindungsgemäße
Siegelbacken nicht nur zum Herstellen von Siegelnähten sondern auch von Schweißnähten an siegel- oder schweißbaren
Packstoffen verwendbar ist.

VM 706

5.5.1981 Gl/han

<u>ROBERT BOSCH GMBH, 7000 Stuttgart</u>

<u>Ansprüche</u>

1. Siegelbacken zum Bilden von Nähten an heißsiegelbaren Packstoffen mit einer langgestreckten Höhlung, in der ein elektrisch betriebenes Heizelement angeordnet ist, dadurch gekennzeichnet, daß das Heizelement (17, 20) in einer dickwandigen Hülse (15, 21) aus einem hochwärmeleitfähigen Metall eingesetzt ist, welche in der Höhlung (14) des Siegelbackens (10) sitzt.

2. Siegelbacke nach Anspruch 1, dadurch gekennzeichnet, daß die Hülse (15, 21) stramm passend in der Höhlung (14) des Siegelbackens (10) sitzt.

3. Siegelbacke nach Anspruch 1, dadurch gekennzeichnet, daß zwischen der Hülse (21) und der Höhlung (14) des Siegelbackens (10) auf der der Siegelfläche (12) abgewandten Seite der Hülse ein Spalt angeordnet ist.

4. Vorrichtung nach einem der Ansprüche 1-3, dadurch gekennzeichnet, daß die Hülse (15, 21) aus Aluminium besteht.

FIG.1

FIG.1

FIG.3

# 0064713

## Europäisches Patentamt

## EUROPÄISCHER RECHERCHENBERICHT

EP 82103767.8

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - B2 - 2 413 294 (FR. HESSER) <br><br> * Gesamt * <br><br> ---- | 1-4 | B 65 B 51/10 |

**RECHERCHIERTE SACHGEBIETE (Int. Cl.³)**

B 29 C 27/00
B 65 B 51/00
H 05 B  3/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|
| X | |

| Recherchenort | Abschlußdatum der Recherche | Prüfer |
|---|---|---|
| WIEN | 16-08-1982 | MELZER |